Europäisches Patentamt

European Patent Office

Office européen des brevets

(19)

(11) Publication number: 0 146 682
A1

# (12) EUROPEAN PATENT APPLICATION

(21) Application number: 84109077.2

(22) Date of filing: 01.08.84

(51) Int. Cl.⁴: B 25 J 17/00

(30) Priority: 22.12.83 JP 242696/83

(43) Date of publication of application:
03.07.85 Bulletin 85/27

(84) Designated Contracting States:
DE GB SE

(71) Applicant: KABUSHIKI KAISHA YASKAWA DENKI
SEISAKUSHO
2346, Oaza-Fujita Yahatanishi-Ku
Kitakyushu-Shi Fukuoka-Ken(JP)

(72) Inventor: Kimura, Kaoru
25-4, Wakaba 3-Chome Yahatanishi-Ku
Kitakyushu-shi Fukuoka-Ken(JP)

(72) Inventor: Sato, Shunji
12-42, Kosagida-Machi Yahatanishi-Ku
Kitakyushu-Shi Fukuoka-Ken(JP)

(72) Inventor: Ogawa, Junichiro
11-12-203, Gion 3-Chome Yahatahigashi-Ku
Kitakyushu-Shi Fukuoka-Ken(JP)

(72) Inventor: Nakano, Mitsuyoshi
1-13-201, Hinosato 5-Chome
Munakata-Shi Fukuoka-Ken(JP)

(74) Representative: Reichel, Wolfgang, Dipl.-Ing. et al,
Reichel und Reichel Parkstrasse 13
D-6000 Frankfurt am Main 1(DE)

(54) Wrist mechanism for industrial robot.

(57) A wrist mechanism for an industrial robot has three degrees of freedom. The first degree of freedom is associated with a first input shaft for rotating a wrist portion at a low speed. The second and third degrees of freedom are associated with rotating the tool or tilting the wrist. In order to attain these motions, second and third input shafts are concentrically arranged relative to the first input shaft. Furthermore in a wrist mechanism of the type that two sets of differential speed reduction devices are provided within a wrist and arranged symmetrically of and perpendicularly to the axis of an arm and that the adjustment of the angle of the wrist and the rotation of a tool carried out through the differential speed reduction devices, a novel wrist mechanism is provided for preventing a wrist cover from entering into a dead point condition. The wrist mechanism comprises a guide protrusion and a guide.

FIG. 2

# WRIST MECHANISM FOR INDUSTRIAL ROBOT

## BACKGROUND OF THE INVENTION

The present invention relates to a structure of a wrist having three degrees of freedom for use with an industrial robot.

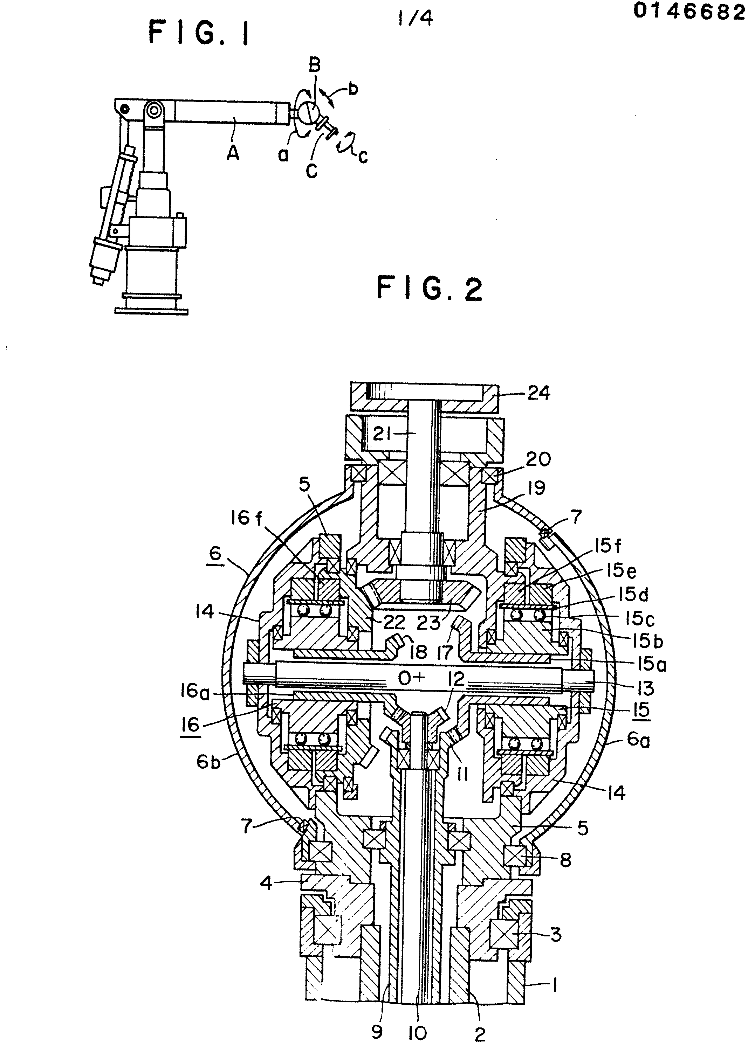

A wrist coupled to the end of the arm of an industrial robot is required to have suitable motions for carrying out a desired job in three dimensional space. Thus, as shown in FIG. 1, an entire wrist B coupled to an arm A must be rotated in a direction shown by an arrow a, the angle of a tool C mounted on the wrist must be adjusted or tilted as shown by a reference character b, and the tool itself must be rotated as shown by a reference character c. In order to meet the above requirements, three drive shafts must be inserted into the interior of the arm supporting the wrist, so that the outer dimension and weight of the arm disadvantageously increase and the power for driving the arm increases as well.

## SUMMARY OF THE INVENTION

It is an object of the invention to provide a mechanism which enables to impart three degrees of freedom to a wrist of an industrial robot, smoothly and with a simple arrangement.

It is a further object of the invention to provide an industrial robot which enables to eliminate the problems with the conventional apparatus and is provided with a stopper at a fixed side relative to a cover.

According to the present invention, in an industrial robot in which a tool is mounted at the end of an arm through a wrist mechanism, the wrist mechanism for an industrial robot comprises: a first drive shaft rotating at a reduced speed for rotating the whole wrist; second and third drive shafts for tilting and rotating a tool supporting shaft of a wrist portion; said first, second, and third drive shafts being mounted within said arm and the axes thereof being aligned in the same shaft axis line; a speed reduction shaft whose axis is perpendicular to said shaft axis line; and two sets of differential speed reduction devices mounted about said speed reduction shaft; said speed reduction shaft and differential speed reduction devices being mounted within a wrist cover; wherein said second drive shaft is coupled to one of the input shafts of said differential speed reduction devices, said third drive shaft is coupled to the other of the input shafts of said differential speed reduction devices, and the output shafts are coupled to tilting and tool rotation shafts, respectively, or the output shafts are both coupled to a tool mounting shaft through gears.

Furthermore, according to the present invention the wrist mechanism comprises a guide protrusion and a guide. The guide protrusion is provided on the side of a bracket related by one of wrist covers on a wrist portion side, the side being located outside a speed reduction shaft and on the side of the wrist portion relative to the axis of an input shaft. The guide is provided on the inner face of the wrist cover at a point on a locus of the guide protrusion relative to the wrist cover, the point being defined by that at least the axes of a tool rotation shaft and input shafts coincide with each other.

### BRIEF DESCRIPTION OF THE DRAWINGS

FIG. 1 is a side view showing a whole robot of an embodiment according to the present invention;

FIG. 2 is a side cross-sectional view of a first embodiment according to the present invention;

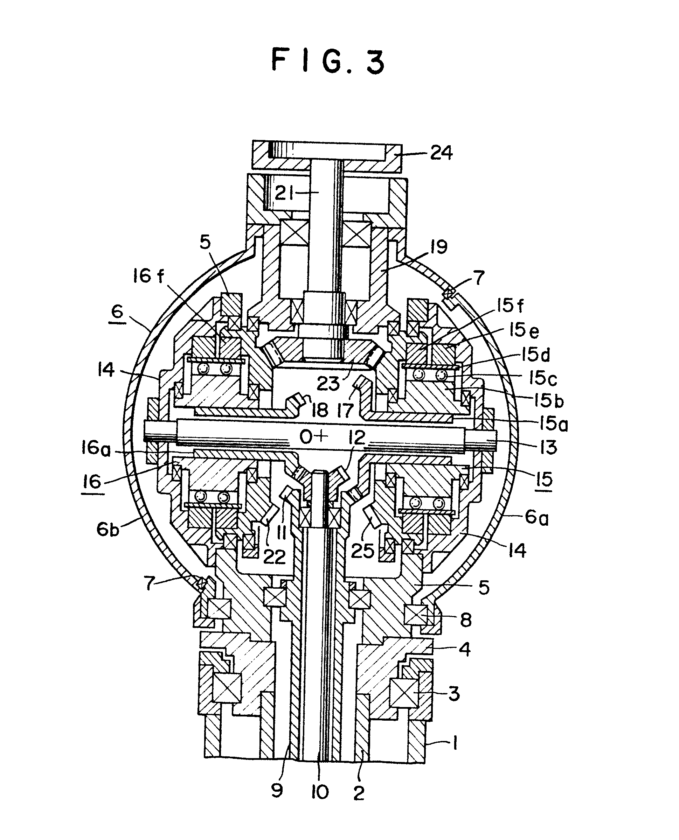

FIG. 3 is a side cross-sectional view of a second embodiment according to the present invention;

FIG. 4 is a side view of a wrist portion under malfunction;

FIG. 5 is a cross-sectional side view of a third embodiment according to the present invention;

FIG. 6 is a plan view of the main part or stopper mechanism of FIG. 5; and

FIGS. 7 to 10 are side views illustrating the change of wrist tilting in a fourth embodiment according to the present invention.

### DETAILED DESCRIPTION OF THE INVENTION

According to an embodiment of the present invention, two sets of differential speed reduction devices are provided within a wrist and arranged symmetrically of and perpendicularly to the axis of an arm. The adjustment of the angle of the wrist and the rotation of a tool are carried out through the differential speed reduction devices, so that input axes for the devices can be made slender and hence the arm can be smaller while improving the accuracy of a mechanism according to the invention. Reference is now made to FIG. 2 for illustrating the embodiment.

Reference number 1 designates an arm, and reference number 2 designates a first input shaft for rotating the whole of a wrist, the first input shaft 2 being coupled to a wrist seat 4 supported by a bearing 3 mounted on the end of the arm 1. Reference number 5 designates a frame integral with the wrist seat 4. Reference number 6 designates a wrist cover having a spherical shape to be divided into two semispherical covers 6a and 6b along a line oblique to the axis of the arm 1. The divided covers 6a and 6b may be rotated along a division plane through a bearing 7, the cover 6a being mounted at the frame 5 through a bearing 8. Reference number 9 designates a second input shaft passing through the interior of the first input shaft 2 and extending to the interior of the wrist cover 6. Reference number 10 designates a third input shaft passing through the interior of the second input shaft, and reference numbers 11 and 12 designate respective bevel gears coupled to the second and third input shafts. Reference number 13 designates a speed reduction shaft supported by brackets 14, 14 mounted on the frame 5, and arranged within the wrist cover perpendicularly to the shaft axis of the arm. Reference number 15, 16 designate differential speed reduction devices each mounted opposite ends of the speed reduction shaft 13.

The differential speed reduction device 15 comprises an input shaft 15a, a drive wheel 15b, a ball bearing 15c, a flexible ring 15d, a fixed wheel 15e, and an output shaft 15f. The input shaft 15a is rotatably mounted on the speed reduction shaft 13 and has a bevel gear 17 meshing with the bevel gear 11. The drive wheel 15b of an elliptical shape is fixedly connected to the input shaft 15a. The flexible ring 15d has a plurality of spline teeth on the outer periphery thereof, and is slidably mounted on the outer periphery of the drive wheel 15b through the ball bearing 15c. The fixed wheel 15e fixed to the bracket 14 and the output shaft 15f rotatably supported by the bracket 14, are each provided with spline teeth meshing with the spline teeth of the flexible ring 15d and having a number of teeth slightly different from that of the flexible ring 15d. In operation, when the input shaft 15a and hence the drive wheel 15b integral therewith is rotated, the longer diameter side portions of the drive wheel 15b push the flexible ring 15d against the fixed wheel 15e and also against the output shaft 15f to thereby mesh both spline teeth with each other. The meshing portions are moved sequentially along the spline teeth while the flexible ring 15d is driven to rotate. Therefore, the flexible ring 15d is rotated at a lower speed reduced in proportion to the difference of the number of spline teeth from that of the fixed wheel 15e, and the output shaft 15f meshing with the flexible ring 15d is rotated at a lower speed reduced in proportion to the difference of the number of spline teeth therebetween.

The differential speed reduction device 16 is constructed in the same way as that of the above mentioned differential speed reduction device 15, in which an input shaft 16a is provided with a bevel gear 18 which meshes with the third input shaft 10.

Reference number 19 designates a tilting shaft mounted on the wrist cover 6b through a bearing 20. The tilting shaft 19 is aligned so as for the axis thereof to pass the intersection point O between the axes of the arm 1 and the speed reduction shaft 13, and is coupled to the output shaft 15f of the differential speed reduction device 15. Reference number 21 designates a tool rotation shaft disposed concentrically and interiorly of the tilting shaft 19 and coupled to the output shaft 16f of the differential speed reduction device 16 through bevel gears 22 and 23. Reference number 24 designates a flange mounted on the tool rotation shaft 21 for mounting a tool.

In effect, the first input shaft 2 driven at a reduced speed by a drive section and passing through the interior of the arm 1, rotates the wrist seat 4, while the second and third input shafts 9 and 10 are disposed within the arm 1 operatively at a high speed. The second input shaft 9 causes the differential speed reduction device 15 to operate via the bevel gears 11 and 17, and in turn causes the tilting shaft 19 to move about the speed reduction shaft 13. At this time, since the wrist cover 6 is divided obliquely relative to the axis of the arm, and the tilting shaft 19 is arranged at one side of the wrist cover 6b, so the tilting shaft 19 causes the cover 6b to turn around through the bearing 7 in the same direction as that of the tilting shaft 19, and also causes the cover 6a to turn around through the bearing 8 by a component force along the direction of the speed reduction shaft. Thus, the tilting shaft 19 tilts at a low speed while retaining a perpendicular relation to the speed reduction shaft.

Further, with the third input shaft 10 driven at a high speed, the differential speed reduction device 16 causes the bevel gear 22 to rotate at a low speed through the bevel gears 12 and 18. The bevel gear 23 meshing with the bevel gear 22 causes, the tool rotation shaft 21 and hence the flange 24 for mounting a tool, to be driven into rotation at a low speed.

As seen from the above description of the embodiment, the rotation and tilt of the wrist and the rotation of the flange mounting a tool, are accomplished through respective each input shaft passing through the interior of the arm. And the speed reduction devices for carrying out the tilt of the wrist and the rotation of the tool are mounted around the speed reduction shaft within the wrist. Therefore, the input shafts passing through the interior of the arm can be coupled at the wrist portion while rotating at a high speed. Thus, transmission torque for the input shafts may be small, and the diameter of the input shafts can be made smaller and hence the arm can be made slender. In addition, since the number of mechanical elements for tilting the wrist and rotating the tool in a transmission system at a low speed is relatively small, an error originated from a backlash or bending is remarkably small. Therefore, the operation accuracy is improved and the manufacture and adjustment can be easily accomplished. Furthermore, since the shaft axes of the input shafts, tilting shaft, and tool rotation shaft intersect at the axis of the speed reduction shaft, there are some advantages that it is easy to calculate the locus of motion of a tool, and it is easy to operate the mechanism. By employing a differential speed reduction device as a speed reduction device, the weight of the device is decreased, and moreover the robot as a whole can be effectively miniaturized and light-weighted. By dividing the wrist cover, it is possible to prevent a dust from entering into the wrist without damaging the wrist operation.

According to another embodiment of the present invention, a speed reduction shaft is mounted within a wrist, the axis of the shaft being perpendicular to the axis of the arm. Two sets of differential speed reduction devices are symmetrically disposed on the speed reduction shaft. Drive shafts for the angle adjustment of a wrist and for the rotation of a tool are passed through the interior of the arm rotating at a high speed. Thus, the drive shafts can be made small and hence the arm can be minituarized while improving the operation accuracy.

In all of the figures, an identical reference number is used for designating the same or corresponding parts.

A cover 6 of a sphere shape is constructed so as to be divided into two semi-spheres along a line oblique to the axis of an arm 1. A divided cover 6a is supported on a frame 5 through a bearing 8, while a cover 6b is engaged with a bearing 7 so as to be rotatable along a division plane.

Reference number 25 is a bevel gear fixedly connected to an output shaft 15f of a differential speed reduction device 15 and meshed with a bevel gear 18 of a tool supporting shaft 21.

A first drive shaft 2 is driven by a not-shown driver at a reduced speed, and passes through the interior of the arm 1 to rotate a wrist seat 4. However, second and third drive shafts 9 and 10 are disposed within the arm 1, the drive shafts rotating at a high speed.

It is assumed here that speed reduction ratios for bevel gears 11 and 17 and for bevel gears 12 and 18 are set equal, and that speed reduction ratios for differential speed reduction devices 15 and 16 are also set equal. In this case, when the second and third drive shafts 9 and 10 are initiated into rotation with an equal speed, then bevel gears 25 and 22 rotates at an equal low speed. Therefore, if the drive shafts 9 and 10 are driven such that the bevel gears 25 and 22 each cause a bevel gear 23 to turn in opposite direction, then the bevel gear 23 does not rotate and the tool supporting shaft 21 is turned about a speed reduction shaft 13 in the direction of rotation of the bevel gears 25 and 22. The cover 6b is turned about on a bearing 7 by a component force along the turning direction of the bevel gears 25 and 23, and the cover 6a is turned about on a bearing 8 by a component force perpendicular to the speed reduction shaft. Thus, the tool supporting shaft 21 is tilted at a low speed while retaining it in a direction perpendicular to the speed reduction shaft 13.

If the second and third drive shafts 9 and 10 are driven in a difference rotational direction, then the bevel gears 25 and 22 are respectively driven in such a direction as the bevel gear 23 is driven in the same direction by both gears 25 and 22. Thus, the tool supporting shaft 21 rotates. At this time, if the speeds of the bevel gears 25 and 22 are different from each other, then the tool supporting shaft 21 tilts while rotating.

As seen from the above description of the second embodiment, the speed reduction shaft is mounted within the wrist, the axis of the shaft being perpendicular to that of the arm. The two sets of differential speed reduction devices are provided about the speed reduction shaft. The first drive shaft for rotating the whole wrist is accommodated within the arm as a low speed rotation shaft. The second and third drive shafts for tilting and rotating the tool supporting

9    0146682

shaft pass through the interior of the arm as high speed rotation shafts, the speeds thereof being reduced by the differential speed reduction devices within the wrist. Therefore, a transmission torque for each of the second and third drive shafts can be small, and the arm for accommodating the drive shafts can be made slender. Further, the number of mechanical elements in a transmission system to the tool supporting shaft under operation of a low speed is small, and errors resulting from a backlash or bending is remarkedly decreased. Thus, it is possible to improve the operation accuracy and to make the manufacture and adjustment to be readily carried out. Moreover, since the axes of the drive shafts and tool supporting shaft intersect at the axis of the speed reduction shaft, the calculation for a locus of motion of a tool can be readily accomplished and the handling of the robot can be made easily. By incorporating a differential speed reduction device, it is possible to obtain a large speed reduction ratio with a light weight. Thus, the weight of the speed reduction device can be decreased which effectively make it possible for the whole robot to be miniturized and light-weighted. Further, since the bevel gear of the tool supporting shaft has two portions meshing with other bevel gears, it is possible to stabilize the operation.

In the wrist mechanism described above, however, an undesirable condition rarely or never happens because the two divided wrist covers 6a and 6b may cause malfunction. More in detail, among various relative positions of the shafts for driving a wrist, there is a relation when the axis of the first input shaft for effecting rotation shown by an arrow a in FIG. 1 and the axis of the tool rotation shaft for effecting rotation shown by an arrow c in FIG. 2 coincide with eath other. At this time, since the bearing 20 and the bearing 8 have the same rotation axis, the wrist cover 6 shown in FIG. 2 comes to a state free to rotate.

The divided wrist covers 6a and 6b at the state shown in FIG. 2 can be rotated as one integral body by hand along the rotary direction with respect to the bearings 20 and 8, and can also be stopped by hand at any position as desired.

In this free state, it is assumed here that the tilting or bending plane defined by a tilting or bending direction b of the second input shaft and a division or separated plane 6c of the cover 6 are caused to intersect at a right angle, by giving a suitable rotation amount to the covers 6a and 6b. When the second input shaft is actuated under the above condition, then the cover 6 is brought into a dead point so that the function thereof cannot be obtained and the breakage may happen.

The critical condition explained above have been introduced by using hand. In practice, however, there is an ample possibility that such a dead point condition may occur to damage the cover 6. For example, upon application of any external force through cables of a tool or the like attached to the end of the arm, the cover 6 under the above mentioned free state may be led to the dead point condition.

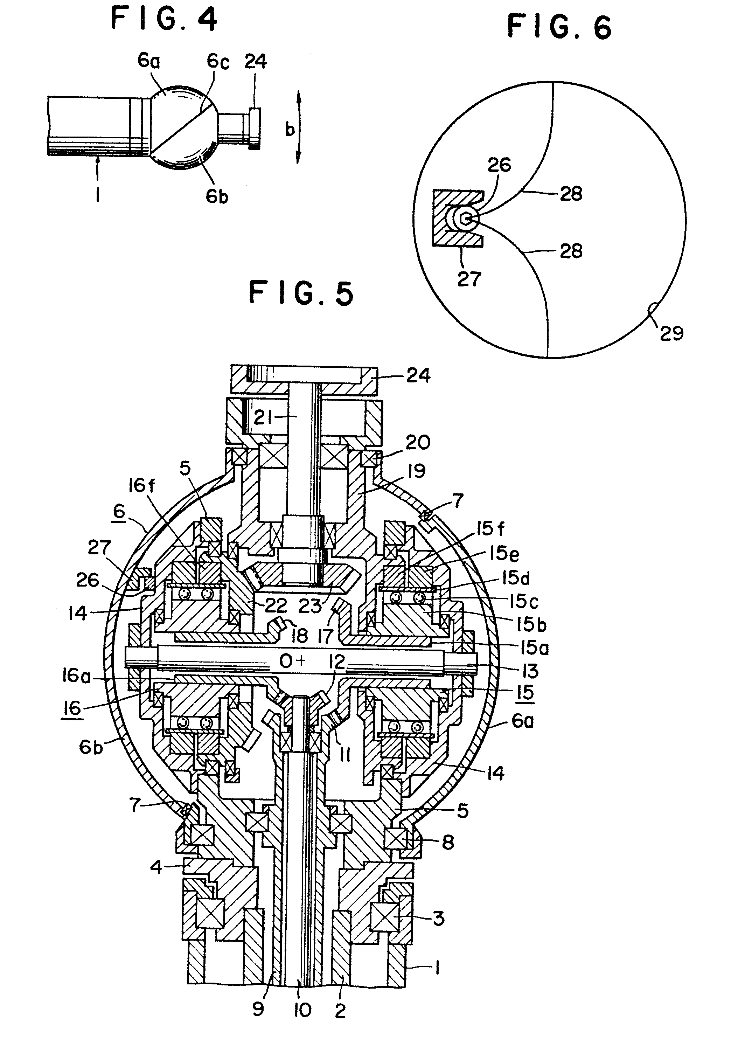

In FIG. 5, the third embodiment according to the present invention is shown as a cross-sectional side view.

FIG. 6 is a plan view of a stopper mechanism for a spherical cover which is a main part of the third embodiment.

A guide protrusion 26 is formed on the side of a bracket 14 related by a wrist cover 6b which is associated with a wrist portion. The side of the bracket 14 is located outside a speed reduction shaft 13 and on the side of the wrist portion relative to the axis of an input shaft.

A guide 27 is provided on the inner face of the wrist cover 6b which is associated with the wrist portion, at a locus point on a locus of the guide protrusion 26 relative to the wrist cover 6. The locus point is defined by that at least the axes of the tool rotation shaft 21 and the input shafts 2 and 9 coincide with each other.

In the case when the second input shaft 9 is moved a little at a time, the locus 28 of the center of the guide protrusion 26 is obtained to have a specific shape as shown in FIG. 6.

The locus 28 has a point of inflection where the axes of the tool rotation shaft 21 and the first input shaft 2 are aligned in a straight line, the point of inflection having an arcuate angle at its tip portion.

The characteristic feature of the locus 28 has been used for mating the guide protrusion 26, mounted as shown in the figure, with the guide 27.

By virtue of the arrangement of the guide protrusion 26 and the guide 27, under the condition that the axes of the tool rotation shaft 21 and the first input shaft 2 are on the same shaft axis, the divided cover 6b is constrained in motion. Therefore, the divided cover 6b cannot rotate freely. Here, the free rotation of the conventional problem can be prevented. In addition, in other various mutual conditions between the tool rotation shaft 21 and the first input shaft 2, the guide protrusion 26 and the guide 27 separate from each other, and the motion of the cover 6 is not constrained.

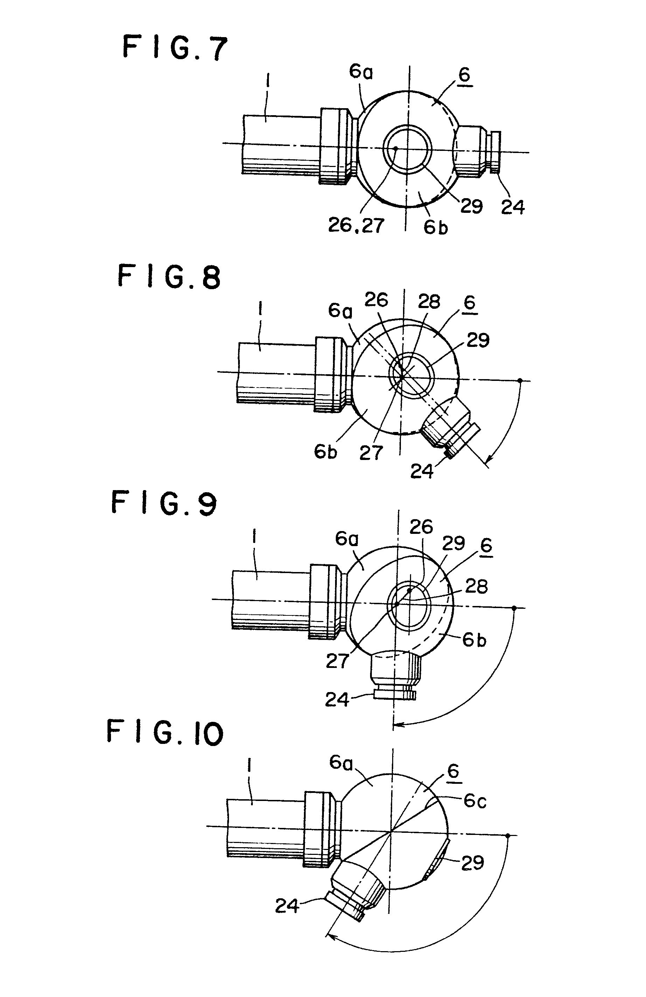

A fourth embodiment according to the present invention is shown in the side views shown in FIGS.7 to 10.

In this embodiment, a check window 29 is formed in the divided cover 6b, and the guide 27 is mounted on the check window cover. The check window 29 is here covered with transparent glass in order to enable to look at the interior. Upon actuating the second input shaft 9 so as to move the tool rotation shaft downward as shown progressively in FIGS. 7 to 9, the cover 6 ultimately reaches its operation limit as shown in FIG. 10.

The locus 28 shown in FIG. 6 may be obtained by looking from the outside and by plotting on the cover 6b the central positions of the guide protrusion 26 as they change with the movement of the cover 6.

As seen from FIGS. 7 to 10, when the cover is moved below the position where the second input shaft 9 takes a horizontal position, the locus 28 appears on the upper half of the check window 29. And when the cover is moved over the position where the second input shaft 9 takes a horizontal position, the completely symmetrical locus 28 appears on the lower half of the check window. Therefore, it is seen that the locus 28 has a point of inflection as shown in FIG. 6 at the positions (FIGS. 5 to 7) where the guide protrusion 26 and the guide 27 mate with each other. Thus, according to the present invention, the cover 6 can be locked only at the point of inflection.

As appreciated, according to the third and fourth embodiments, it is possible to attain a mechanical stopper mechanism which can fully and readily solve the problem which may occur with a small light-weighted industrial robot. Thus, the reliability of the operation of the wrist mechanism for an industrial robot can absolutely be established, and the productivity through the robot can be largely improved.

Claims:

1. Industrial robot in which a tool is mounted on the end of an arm through a wrist mechanism, said wrist mechanism for an industrial robot comprising:

a first input shaft (2) rotating at a reduced speed for rotating the whole wrist;

a second input shaft (9) for tilting the wrist portion;

a third input shaft (10) for rotating said tool; said first, second, and third input shafts being mounted within said arm and the axes thereof being aligned in the same shaft axis line;

a speed reduction shaft (13) whose axis is perpendicular to said same shaft axis line;

differential speed reduction devices (15, 16) mounted about said speed reduction shaft (13) respectively; and

a tilting shaft (19) for a wrist and a tool rotation shaft (21), the axes of both shafts disposed concentrically with each other passing through an intersection point between the axes of said input shafts and said speed reduction shafts; said speed reduction shaft (13), differential speed reduction devices(15, 16), tilting shaft (19), and tool rotation shaft (21) being mounted within a wrist cover (6),

wherein said second input shaft (9) and tilting shaft (19) are coupled to one of said differential speed reduction devices (15 or 16) and said third input shaft (10) and tool rotation shaft (21) are coupled to the other of said differential speed reduction devices (16 or 15); said wrist cover (6) is divided obliquely and is formed to have a sphere shape and to be rotatable along a division plane; and one of the divided wrist (6a or 6b) covers is mounted rotatably on a wrist seat and the other of the divided wrist covers (6b or 6a) has said tilting shaft and tool rotation shaft mounted thereon.

2. A wrist mechanism for an industrial robot as set forth in claim 1, in which said differential speed reduction devices (15, 16) each comprises a drive wheel of an ellipse shape coupled to an input shaft; a flexible ring slidably along the outer periphery of said drive wheel and having a plurality of spline teeth; and a fixed wheel and an output wheel, surrounding said flexible ring and having a plurality of spline teeth at the inner peripheries thereof, said plurality of spline teeth meshing with said spline teeth of said flexible ring and having the number of spline teeth slightly different from that of the flexible ring.

3. Industrial robot in which a tool is mounted at the end of an arm through a wrist mechanism, said wrist mechanism for an industrial robot comprising:

a first drive shaft (2) rotating at a reduced speed for rotating the whole wrist;

second and third drive shafts (9 and 10) for tilting and rotating a tool supporting shaft of a wrist portion; said first, second, and third drive shafts (2, 9, 10) being mounted within said arm and the axes thereof being aligned in the same shaft axis line;

a speed reduction shaft (13) whose axis is perpendicular to said shaft axis line; and

two sets of differential speed reduction devices (15, 16) mounted about said speed reduction shaft (13); said speed reduction shaft and differential speed reduction devices being mounted within a wrist cover (6);

wherein one of the input shafts of said differential speed reduction devices (15, 16) is coupled to said second drive shaft (9) and the other of the input shafts of said differential speed reduction devices is coupled to said third drive shaft (10), and the output shafts thereof are coupled to a tool mounting shaft through gears; said wrist cover (6) is divided obliquely and is formed to have a spere shape and to be rotatable along a division plane; and one of the divided wrist covers (6a or 6b) is mounted rotatably on a wrist seat and the other of the divided wrist covers has said tool supporting shaft mounted thereon.

4. A wrist mechanism for an industrial robot as set forth in claim 3, in which said differential speed reduction devices (15, 16) each comprises a drive wheel of an ellipse shape coupled to an input shaft; a flexible ring slidably along the outer periphery of said drive wheel and having a plurality of spline teeth; and a fixed wheel and an output wheel, surrounding said flexible ring and having a plurality of spline teeth at the inner peripheries thereof, said plurality of spline teeth meshing with said spline teeth of said flexible ring and having the number of spline teeth slightly different from that  of the flexible ring.

5. A wrist mechanism for an industrial robot in which a tool is mounted at the end of an arm through the wrist mechanism, and in which the wrist mechanism comprises:

a first input shaft (2) rotating at a reduced speed for rotating the whole wrist;

a second input shaft (9) for tilting a wrist portion;

a third input shaft (10) for rotating the tool; said first, second, and third input shafts (2, 9, 10) being mounted within the arm and the axes thereof being aligned in the same shaft axis line;

a wrist cover (6) which is generally of a sphere shape and is divided obliquely relative to said input shaft axes and is formed to have a sphere shape and to be rotatable along a division plane, one of the divided wrist covers (6a or 6b) being rotatably mounted on a wrist seat and the other of the divided wrist covers having a tilting shaft (19) and a tool rotation shaft (21) mounted thereon;

a speed reduction shaft (13) journaled at opposite ends thereof by both brackets disposed facing to each other, said speed reduction shaft (13) being perpendicular to said input shaft axes and coupled to said first input shaft;

differential speed reduction devices (15, 16) mounted about said speed reduction shaft respectively; and

said tilting shaft (19) for a wrist and rotation shaft being aligned in the same shaft axis line passing through an intersecting point between the axes of said input shafts and said speed reduction shaft; and said speed reduction shaft (13), differential speed reduction devices (15, 16), tilting shaft (19), and rotation shaft (21) being mounted within said wrist cover (6);

said wrist mechanism for an industrial robot comprising:

a guide protrusion (26) provided on the side of one of the brackets related by said other of the divided wrist covers associated with said wrist portion, said side being located outside said speed reduction shaft (13) and on the side of said wrist portion relative to the axis of said input shafts; and

a guide (27) provided on the inner face of said wrist cover (6) at a point on a locus of said guide protrusion relative to said wrist cover, said point being defined by that at least the axes of said tool rotation shaft (21) and input shafts (2, 9, 10) coincide with each other.

0146682

# FIG. 1

B
b
A
a
C
c

# FIG. 2

24
21
20
5
19
16f
7
6
15f
14
15e
15d
15c
22 23
15b
18 17
15a
16a
O+ 12
13
16
15
6b
6a
11
14
7
5
9 10 2
8
4
3
1

0146682

# FIG. 3

0146682

FIG. 4

FIG. 6

FIG. 5

FIG.7

FIG.8

FIG.9

FIG.10

# EUROPEAN SEARCH REPORT

## European Patent Office

| | DOCUMENTS CONSIDERED TO BE RELEVANT | | EP 84109077.2 |
|---|---|---|---|

| Category | Citation of document with indication, where appropriate, of relevant passages | Relevant to claim | CLASSIFICATION OF THE APPLICATION (Int. Cl 4) |
|---|---|---|---|
| A | DE - A1 - 2 927 485 (DAIMLER-BENZ)<br><br>* Fig.; pages 7-9; claims *<br><br>-- | 1,3,5 | B 25 J 17/00 |
| A | DE - A1 - 3 219 292 (JUNGHEINRICH)<br><br>* Fig. 1; page 10, paragraph 2 *<br><br>-- | 1,3,5 | |
| A | US - A - 4 402 234 (MALARZ)<br><br>* Fig. 1,2; abstract; claims *<br><br>-- | 1,3,5 | |
| A | DE - B2 - 2 226 407 (KELLER & KNAPPICH)<br><br>* Fig. 4,6; column 6, lines 39-54 *<br><br>---- | 1-5 | |

|  | TECHNICAL FIELDS SEARCHED (Int. Cl 4) |
|---|---|
| | B 25 J 17/00 |
| | B 25 J 15/00 |
| | B 25 J 11/00 |
| | B 25 J  9/00 |

The present search report has been drawn up for all claims

| Place of search | Date of completion of the search | Examiner |
|---|---|---|
| VIENNA | 12-04-1985 | KRAL |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82